# EUROPEAN PATENT SPECIFICATION

(11) **EP 3 734 161 B1**
(45) Date of publication and mention of the grant of the patent: **16.08.2023**
(21) Application number: 20172128.9
(22) Date of filing: 29.04.2020
(51) Int. Cl.: F23R 3/00, F23R 3/06

(54) **GAS TURBINE ENGINE COMBUSTOR COMPRISING A LINER PANEL WITH MICRO-CIRCUIT CORE COOLING**
GASTURBINENMOTORBRENNKAMMER UMFASSEND EINE AUSKLEIDUNGSPLATTE MIT MIKROKREISLAUFKERNKÜHLUNG
CHAMBRE DE COMBUSTION DE MOTEUR DE TURBINE À GAZ COMPPRENANT UN PANNEAU DE CHEMISE AVEC REFROIDISSEMENT INTERNE PAR MICROCIRCUIT

(30) Priority: 03.05.2019 US 201916402707
(43) Date of publication of application: 04.11.2020
(73) Proprietor: Raytheon Technologies Corporation, Farmington, CT 06032 (US)
(72) Inventor: PAAUWE, Corneil S., South Windsor CT 06074 (US); WONG, Eva, Glastonbury, CT 06033 (US); QUACH, San, Southington, CT 06489 (US); STYBORSKI, Jeremy, East Hartford, CT 06118 (US); KARANIAN, Caroline, West Hartford, CT 06119 (US); CURTIS, Lauryn M., Manchester, CT 06042 (US); PORTER, Steven D., Wethersfield, CT 06109 (US); DAI, Zhongtao, West Hartford, CA 06107 (US)
(74) Representative: Dehns

(56) References cited:
- EP-A1- 2 995 864
- EP-A1- 3 124 746
- GB-A- 2 358 226
- US-A1- 2012 034 075
- US-A1- 2014 096 528
- US-A1- 2017 115 006

## Description

### BACKGROUND

The subject matter disclosed herein generally relates to gas turbine engines and, more particularly, to a method and apparatus for mitigating heat in cooling surfaces of gas turbine engines using heat shield panels.

In one example, a combustor of a gas turbine engine may be configured to burn fuel in a combustion area. Such configurations may place substantial heat load on the structure of the combustor (e.g., heat shield panels, shells, etc.). Such heat loads may dictate that special consideration is given to structures, which may be configured as heat shields or panels, and to the cooling of such structures to protect these structures. Excess temperatures at these structures may lead to oxidation, cracking, and high thermal stresses of the heat shields panel.

EP 2995864 discloses a liner of a combustor wall assembly including a film cooling circuit having a channel communicating through a hot face of a substrate of the liner.

US 2017/115006 discloses a turbine component that includes a structure having hot and cold surfaces opposite each other; and a plurality of cooling holes extending between the cold and hot surfaces, each of the cooling holes including at least one projection or recess element to form part of a fluid path surface with enhanced in-hole heat convection.

US2014/096528 describes a combustor for a gas turbine engine according to the preamble of claim 1.

### SUMMARY

According to a first aspect of the invention there is provided a combustor for use in a gas turbine engine as claimed in claim 1.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should be considered exemplary. With reference to the accompanying drawings, like elements are numbered alike:
FIG. 1 is a partial cross-sectional illustration of a gas turbine engine;
FIG. 2 is a cross-sectional illustration of a combustor;
FIG. 3 is an enlarged view of a shell and a heat shield panel for use in a combustor of a gas turbine engine; and
FIG. 4 is an enlarged view of a shell and a heat shield panel of a combustor for use in a combustor of a gas turbine engine, the heat shield panel including a cooling circuit.

The detailed description explains configurations of the present disclosure, together with advantages and features, by way of example with reference to the drawings.

### DETAILED DESCRIPTION

A detailed description of one or more configurations of the disclosed apparatus and method are presented herein by way of exemplification and not limitation with reference to the Figures.

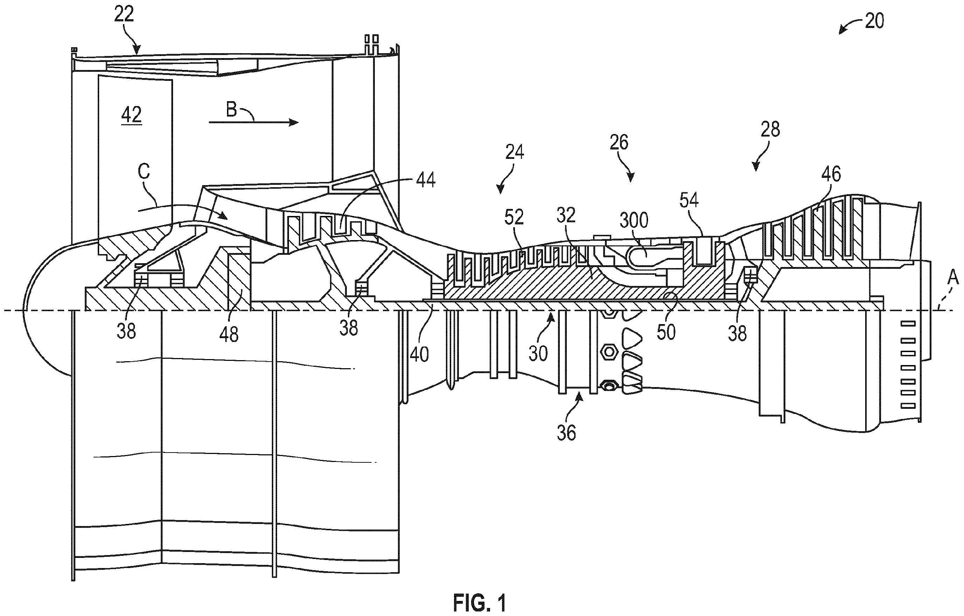

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting configuration, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one configuration of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight conditiontypically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

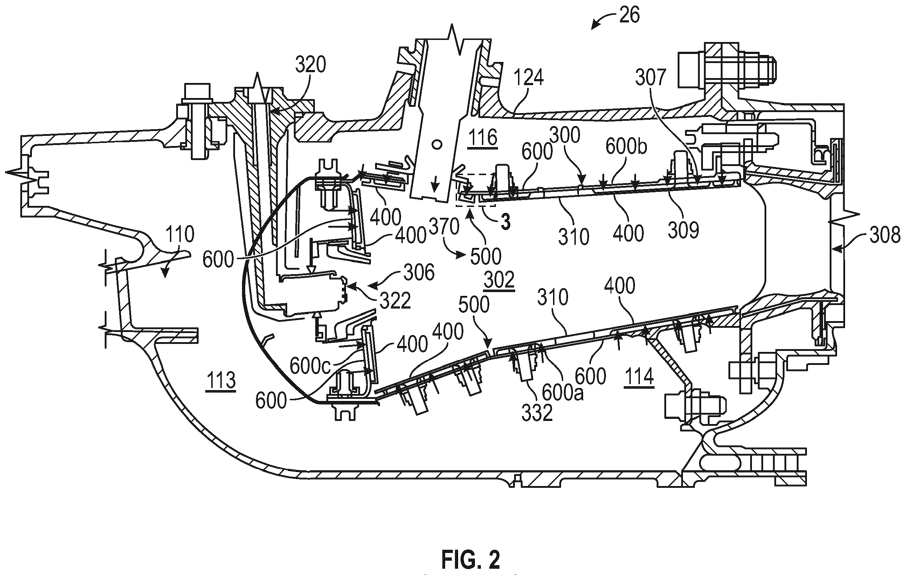

Referring now to FIG. 2, with continued reference to FIG. 1, the combustor section 26 of the gas turbine engine 20 is shown. The combustor 300 of FIG. 2 is an impingement film float wall combustor. It is understood that while an impingement film float wall combustor is utilized for exemplary illustration, the configurations disclosed herein may be applicable to other types of combustors for gas turbine engines including but not limited to double pass liner combustors, float wall combustors, and combustors with single wall liners.

As illustrated, a combustor 300 defines a combustion chamber 302. The combustion chamber 302 includes a combustion area 370 within the combustion chamber 302. The combustor 300 includes an inlet 306 and an outlet 308 through which air may pass. The air may be supplied to the combustor 300 by a pre-diffuser 110. Air may also enter the combustion chamber 302 through other holes in the combustor 300 including but not limited to quench holes 310, as seen in FIG. 2.

Compressor air is supplied from the compressor section 24 into a pre-diffuser 110, which then directs the airflow toward the combustor 300. The combustor 300 and the pre-diffuser 110 are separated by a dump region 113 from which the flow separates into an inner shroud 114 and an outer shroud 116. As air enters the dump region 113, a portion of the air may flow into the combustor inlet 306, a portion may flow into the inner shroud 114, and a portion may flow into the outer shroud 116.

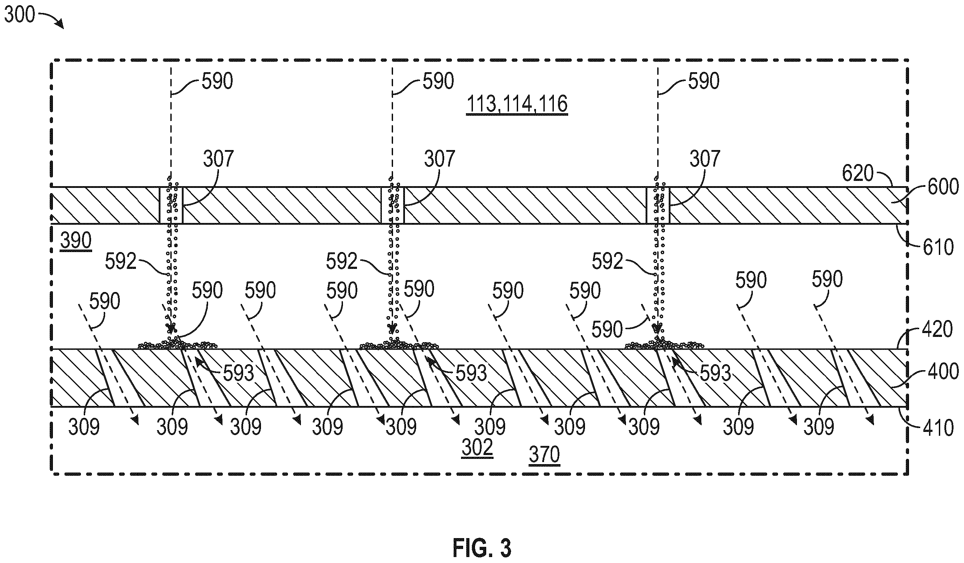

The air from the inner shroud 114 and the outer shroud 116 may then enter the combustion chamber 302 by means of one or more primary apertures 307 in the shell 600 and one or more secondary apertures 309, as shown in FIGS. 2 and 3. The primary apertures 307 and secondary apertures 309 may include nozzles, holes, etc. The air may then exit the combustion chamber 302 through the combustor outlet 308. At the same time, fuel may be injected into the combustion chamber 302 through the primary and/or secondary orifices of a fuel injector 320 and a pilot nozzle 322, which may be atomized and mixed with air, and then ignited and burned within the combustion chamber 302. The combustor 300 of the engine combustion section 26 may be housed within diffuser cases 124 which may define the inner shroud 114 and the outer shroud 116.

The combustor 300, as shown in FIG. 2, includes multiple heat shield panels 400 that are attached to one or more shells 600 (See FIG. 3). The heat shield panels 400 may be arranged parallel to the shell 600. The shell 600 includes a radially inward shell 600a and a radially outward shell 600b in a facing spaced relationship defining the combustion chamber 302 therebetween. The shell 600 also includes a forward shell 600c extending between the radially inward shell 600a and the radially outward shell 600b. The forward shell 600c further bounds the combustion chamber 302 on a forward end. The radially inward shell 600a and the radially outward shell 600b extend circumferentially around the longitudinal engine axis A. The radial inward shell 600a is located radially inward from the radially outward shell 600b.

The heat shield panels 400 can be removably mounted to the shell 600 by one or more attachment mechanisms 332. In some configurations, the attachment mechanism 332 may be integrally formed with a respective heat shield panel 400, although other configurations are possible. In some configurations, the attachment mechanism 332 may be a threaded mounting stud or other structure that may extend from the respective heat shield panel 400 through the interior surface to a receiving portion or aperture of the shell 600 such that the heat shield panel 400 may be attached to the shell 600 and held in place. The heat shield panels 400 partially enclose a combustion area 370 within the combustion chamber 302 of the combustor 300.

Referring now to FIG. 3, with continued reference to FIGs. 1 and 2, a heat shield panel 400 and shell 600 of the combustor 300 (see FIG. 2) conventionally used within the gas turbine engine 20 (see FIG. 1) is shown. Combustors 300 of gas turbine engines 20, as well as other components, experience elevated heat levels during operation. Impingement and convective cooling of heat shield panels 400 of the combustor 300 may be used to help cool the combustor 300. Convective cooling may be achieved by air that is channeled between the heat shield panels 400 and a shell 600 of the combustor 300. Impingement cooling may be a process of directing relatively cool air from a location exterior to the combustor 300 toward a back or underside of the heat shield panels 400.

Thus, heat shield panels 400 are utilized to face the hot products of combustion within a combustion chamber 302 and protect the overall shell 600 of the combustor 300. The heat shield panels 400 may be supplied with cooling air including dilution passages which deliver a high volume of cooling air into a hot flow path. The cooling air may be air from the compressor of the gas turbine engine 20. The cooling air may impinge upon a back side (i.e., second surface 420) of the heat shield panel 400 that faces the shell 600 inside the combustor 300. The cooling air may contain particulates, which may build up on the heat shield panels 400 overtime, thus reducing the cooling ability of the cooling air. Embodiments disclosed herein seek to address particulate adherence to the heat shield panels 400 in order to maintain the cooling ability of the cooling air.

The heat shield panel 400 and the shell 600 are in a facing spaced relationship. The heat shield panel 400 includes a first surface 410 oriented towards the combustion area 370 of the combustion chamber 302 and a second surface 420 opposite the first surface 410 oriented towards the shell 600. The shell 600 has an inner surface 610 and an outer surface 620 opposite the inner surface 610. The inner surface 610 is oriented toward the heat shield panel 400. The outer surface 620 is oriented outward from the combustor 300 proximate the inner shroud 114 and the outer shroud 116.

The shell 600 includes a plurality of primary apertures 307 configured to allow airflow 590 from the inner shroud 114 and the outer shroud 116 to enter a cavity 390 located between the shell 600 and the heat shield panel 400. Each of the primary apertures 307 extend from the outer surface 620 to the inner surface 610 through the shell 600.

Each of the primary apertures 307 fluidly connects the cavity 390 to at least one of the inner shroud 114 and the outer shroud 116. The heat shield panel 400 may include one or more secondary apertures 309 configured to allow airflow 590 from the cavity 390 to the combustion area 370 of the combustion chamber 302.

Each of the secondary apertures 309 extend from the second surface 420 to the first surface 410 through the heat shield panel 400. Airflow 590 flowing into the cavity 390 impinges on the second surface 420 of the heat shield panel 400 and absorbs heat from the heat shield panel 400.

As seen in FIG. 3, particulate 592 may accompany the airflow 590 flowing into the cavity 390. Particulate 592 may include but is not limited to dirt, smoke, soot, volcanic ash, or similar airborne particulate known to one of skill in the art. As the airflow 590 and particulate 592 impinge upon the second surface 420 of the heat shield panel 400, the particulate 592 may begin to collect on the second surface 420, as seen in FIG. 3. Particulate 592 collecting upon the second surface 420 of the heat shield panel 400 reduces the cooling efficiency of airflow 590 impinging upon the second surface 420 and thus may increase local temperatures of the heat shield panel 400 and the shell 600. Particulate 592 collection upon the second surface 420 of the heat shield panel 400 may potentially create a blockage 593 to the secondary apertures 309 in the heat shield panels 400, thus reducing airflow 590 into the combustion area 370 of the combustion chamber 302. The blockage 593 may be a partial blockage or a full blockage.

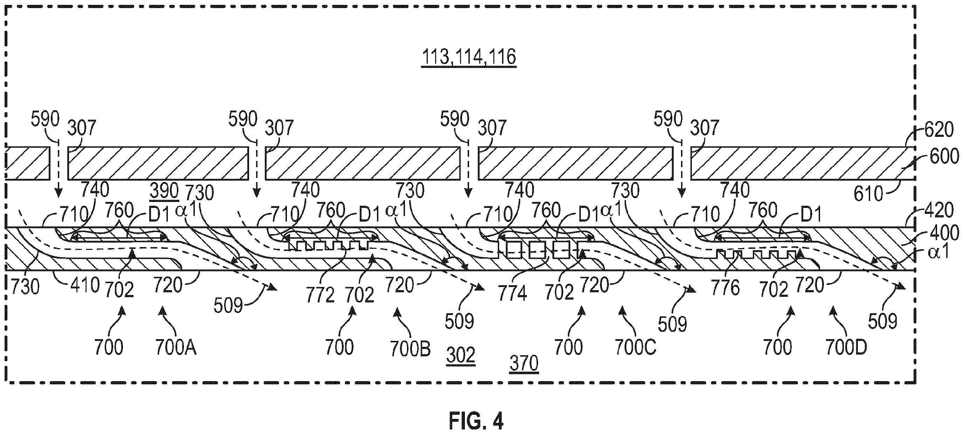

Referring now to FIG. 4, with continued reference to FIGS. 1-3, a heat shield panel 400 and shell 600 of the combustor 300 (see FIG. 2) for the gas turbine engine 20 (see FIG. 1) is shown. The heat shield panel 400 and the shell 600 are in a facing spaced relationship. The heat shield panel 400 includes a first surface 410 oriented towards the combustion area 370 of the combustion chamber 302 and a second surface 420 opposite the first surface 410 oriented towards the shell 600. The shell 600 has an inner surface 610 and an outer surface 620 opposite the inner surface 610. The inner surface 610 is oriented toward the heat shield panel 400. The outer surface 620 is oriented outward from the combustor 300 proximate the inner shroud 114 and the outer shroud 116.

The shell 600 includes a plurality of primary apertures 307 configured to allow airflow 590 from the inner shroud 114 and the outer shroud 116 to enter a cavity 390 located between the shell 600 and the heat shield panel 400. Each of the primary apertures 307 extend from the outer surface 620 to the inner surface 610 through the shell 600. Each of the primary apertures 307 fluidly connects the cavity 390 to at least one of the inner shroud 114 and the outer shroud 116.

The heat shield panel 400 includes one or more cooling circuits 700 configured to allow airflow 590 from the cavity 390 to the combustion area 370 of the combustion chamber 302. The cooling circuit 700 of the heat shield panel 400 may be formed using various methods include but not limited to additive manufacturing, casting, machining, welding, forming, or investment casting with expendable ceramic cores used to create cooling circuit channels. Each of the cooling circuits 700 includes an airflow passageway 702 that extends from the second surface 420 to the first surface 410 through the heat shield panel 400. The cooling circuit 700 includes an inlet 710 at the second surface 420 and an outlet 720 at the first surface 410. The inlet 710 is fluidly connected to the outlet 720 through the airflow passageway 702. The inlet 710 fluidly connects the cooling circuit 700 to the cavity 390 and the outlet fluidly connects the cooling circuit 700 to the combustion area 370 of the combustion chamber 302.

An inward surface 730 and an outward surface 740 define the airflow passageway 702 therebetween, as illustrated in FIG. 4. The inward surface 730 extends from the second surface 420 of the heat shield panel 400 to the first surface 410 of the heat shield panel 400. The inward surface 730 extends from the inlet 710 to the outlet 720 through the heat shield panel 400. The outward surface 740 extends from the second surface 420 of the heat shield panel 400 to the first surface 410 of the heat shield panel 400. The outward surface 740 extends from the inlet 710 to the outlet 720 through the heat shield panel 400. The inward surface 730 and the outward surface 740 may be in a facing spaced relationship extending from the inlet 710 to the outlet 720 defining the airflow passageway 702 therebetween, as shown in FIG. 4.

At the outlet 720, the outward surface 740 is oriented at an obtuse angle α1 relative to the first surface 410 of the heat shield panel 400.

Advantageously, the selected angle α1 allows the cooling circuit 700 to direct airflow 590 of the outlet 720 and about parallel to the first surface 410 of the heat shield panel 400, thus creating a cooling film of airflow 590 on the first surface 410 of the heat shield panel 400. This cooling film helps protect the first surface 410 of the heat shield panel 400 from the excessive heat in the combustion area 370 by cooling the first surface 410 of the heat shield panel.

The airflow passageway 702 includes a parallel portion 760 oriented about parallel to at least one of the first surface 410 of the heat shield panel 400 and the second surface 420 of the heat shield panel 400. Within the parallel portion 760 the inward surface 730 may be oriented about parallel with the first surface 410 and/or the outward surface 740 may be oriented about parallel with the second surface 420. The parallel portion 760 may extend a first length D1 through the heat shield panel 400.

Advantageously, by diverting the airflow 590 through the parallel portion 760 for the first length D1, the surface area for convective heat transfer between the heat shield panel 400 and the airflow 590 within the cooling circuit 700 is greater than the secondary apertures shown in FIG. 3. Also advantageously, the airflow passageway 702 creates an additional surface for convective heat transfer between the heat shield panel 400 and the airflow 590 if particulate 592 has built up on the second surface 420, which impedes heat transfer between the airflow 590 and the second surface 420 of the heat shield panel 400, see FIG. 3. Also advantageously, by diverting the airflow 590 through the parallel portion 760 for the first length D1, the traverse flow of airflow 590 through the cooling circuit 700 discourages collection of particulate 592 on the second surface 420 of the heat shield panel 400 more than the substantially perpendicular flow shown in FIG. 3.

The cooling circuit 700 also includes tripping devices 772, 774, 776 that are incorporated into airflow passageway 702. The tripping devices 772, 774, 776 may be rounded pins, rough patches of surface area or any obstacle protruding away from the outward surface 740. As shown at 700B in FIG. 4, and according to the invention as defined by the claims, the cooling circuit 700 includes one or more tripping devices 772 extending away from the outward surface 740 into the airflow passageway 702 of cooling circuit 700. As shown at 700D in FIG. 4, and according to a configuration which is not part of the invention as defined by the claims, the cooling circuit 700 may include one or more tripping devices 776 extending away from the inward surface 730 into the airflow passageway 702 of cooling circuit 700. As shown at 700C in FIG. 4, and according to a configuration which is not part of the invention as defined by the claims, the cooling circuit 700 may include one or more tripping devices 774 extending away from the inward surface 730 to the outward surface 740 through the airflow passageway 702 of cooling circuit 700. As shown at 700A in FIG. 4, and according to a configuration which is not part of the invention as defined by the claims, the cooling circuit 700 may include no tripping devices 772, 774, 776.

Advantageously, the tripping devices 772, 774, 776 increase the surface area of the cooling circuit for convective heat transfer between the heat shield panel 400 and the airflow 590 within the cooling circuit 700. Also advantageously, the tripping devices 772, 774, 776 also trips the airflow 590 and create turbulence in the airflow 590 within the cooling circuit 700 to firm aid in the convective heat transfer between the heat shield panel 400 and the airflow 590 within the cooling circuit 700.

Technical effects of configurations of the present disclosure include incorporating a cooling circuit within a heat shield panel of combustor to increase convective heat transfer of cooling airflow through the heat shield panel.

The term "about" is intended to include the degree of error associated with measurement of the particular quantity based upon the equipment available at the time of filing the application.

The terminology used herein is for the purpose of describing particular configurations only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

It is intended that the present disclosure not be limited to the particular configuration disclosed as the best mode contemplated for carrying out this present disclosure, but that the present disclosure will include all embodiments falling within the scope of the claims.

## Claims

1. A combustor (300) for use in a gas turbine engine, the combustor enclosing a combustion chamber (302) having a combustion area (370), wherein the combustor comprises:
a shell (600) having an inner surface (610) and an outer surface (620) opposite the inner surface, the shell comprising a primary aperture (307) extending from the outer surface to the inner surface through the shell; and
a heat shield panel (400) comprising:
a first surface (410);
a second surface (420) opposite the first surface of the heat shield panel; and
a cooling circuit (700) formed internally within the heat shield panel, the cooling circuit comprising an inlet (710) at the second surface of the heat shield panel, an outlet (720) at the first surface of the heat shield panel, an inward surface (730), and an outward surface (740), the inward surface and the outward surface being in a facing spaced relationship extending from the inlet to the outlet defining an airflow passageway (702) therebetween,
wherein the airflow passageway includes a parallel portion (760) that is oriented about parallel to at least one of the first surface of the heat shield panel and the second surface of the heat shield panel and wherein the inward surface is configured to be closer to a combustion area (370) of the gas turbine engine than the outward surface at the parallel portion;
wherein the primary aperture of the shell is aligned with the inlet of the cooling circuit to direct airflow to said inlet of the cooling circuit;
wherein the outward surface (740) is oriented at an obtuse angle (α 1) relative to the first surface (410) of the heat shield panel (400) at the outlet (720); **characterized in that**:
the cooling circuit (700) further comprises a tripping device (772) extending away from the outward surface (740) at the parallel portion (760) into the airflow passageway (702), the tripping device terminating within the airflow passageway prior to reaching the inward surface, wherein the cooling circuit does not comprise a tripping device extending away from the inward surface (730) into the airflow passageway.

## Patentansprüche

1. Brennkammer (300) zur Verwendung in einem Gasturbinenmotor, wobei die Brennkammer eine Verbrennungskammer (302), die einen Verbrennungsbereich (370) aufweist, umschließt, wobei die Brennkammer Folgendes umfasst:
eine Schale (600), die eine Innenoberfläche (610) und eine Außenoberfläche (620), der Innenoberfläche entgegengesetzt, aufweist, wobei die Schale eine primäre Öffnung (307) umfasst, die sich von der Außenoberfläche zu der Innenoberfläche durch die Schale erstreckt; und
eine Hitzeschildplatte (400), die Folgendes umfasst:
eine erste Oberfläche (410);
eine zweite Oberfläche (420), der ersten Oberfläche der Hitzeschildplatte entgegengesetzt; und
einen Kühlkreislauf (700), der im Inneren der Hitzeschildplatte gebildet ist, wobei der Kühlkreislauf einen Einlass (710) an der zweiten Oberfläche der Hitzeschildplatte, einen Auslass (720) an der ersten Oberfläche der Hitzeschildplatte, eine nach innen gerichtete Oberfläche (730) und eine nach außen gerichtete Oberfläche (740) umfasst, wobei sich die nach innen gerichtete Oberfläche und die nach außen gerichtete Oberfläche in einer einander zugewandten, beabstandeten Beziehung befinden und sich von dem Einlass zu dem Auslass erstrecken, indem dazwischen ein Luftströmungsdurchgang (702) definiert ist,
wobei der Luftströmungsdurchgang einen parallelen Abschnitt (760) beinhaltet, der etwa parallel zu mindestens einer der ersten Oberfläche der Hitzeschildplatte und der zweiten Oberfläche der Hitzeschildplatte ausgerichtet ist, und wobei die nach innen gerichtete Oberfläche dazu konfiguriert ist, näher an einem Verbrennungsbereich (370) des Gasturbinenmotors zu liegen als die nach außen gerichtete Oberfläche an dem parallelen Abschnitt;
wobei die primäre Öffnung des Gehäuses mit dem Einlass des Kühlkreislaufs ausgerichtet ist, um den Luftstrom zu dem Einlass des Kühlkreislaufs zu leiten;
wobei die nach außen gerichtete Oberfläche (740) in einem stumpfen Winkel (α1) in Bezug auf die erste Oberfläche (410) der Hitzeschildplatte (400) an dem Auslass (720) ausgerichtet ist;
**dadurch gekennzeichnet, dass**:
der Kühlkreislauf (700) ferner eine Auslösevorrichtung (772) umfasst, die sich von der nach außen gerichteten Oberfläche (740) an dem parallelen Abschnitt (760) in den Luftströmungsdurchgang (702) erstreckt, wobei die Auslösevorrichtung vor Erreichen der nach innen gerichteten Oberfläche in dem Luftströmungsdurchgang endet, wobei der Kühlkreislauf keine Auslösevorrichtung umfasst, die sich von der nach innen gerichteten Oberfläche (730) weg in den Luftströmungsdurchgang erstreckt.

## Revendications

1. Chambre de combustion (300) destinée à être utilisée dans un moteur à turbine à gaz, la chambre de combustion renfermant une chambre de combustion (302) ayant une zone de combustion (370), dans laquelle la chambre de combustion comprend :
une coque (600) ayant une surface interne (610) et une surface externe (620) opposée à la surface interne, la coque comprenant une ouverture principale (307) s'étendant de la surface externe à la surface interne à travers la coque ; et
un panneau de bouclier thermique (400) comprenant :
une première surface (410) ;
une seconde surface (420) opposée à la première surface du panneau de bouclier thermique ; et
un circuit de refroidissement (700) formé à l'intérieur du panneau de bouclier thermique, le circuit de refroidissement comprenant une entrée (710) au niveau de la seconde surface du panneau de bouclier thermique, une sortie (720) au niveau de la première surface du panneau de bouclier thermique, une surface intérieure (730) et une surface extérieure (740), la surface intérieure et la surface extérieure étant dans une relation d'espacement face à face s'étendant de l'entrée à la sortie définissant un passage d'écoulement d'air (702) entre elles,
dans laquelle le passage d'écoulement d'air comporte une partie parallèle (760) qui est orientée à peu près parallèlement à au moins l'une parmi la première surface du panneau de bouclier thermique et la seconde surface du panneau de bouclier thermique et dans laquelle la surface intérieure est configurée pour être plus proche d'une zone de combustion (370) du moteur à turbine à gaz que la surface extérieure au niveau de la partie parallèle ;
dans laquelle l'ouverture principale de la coque est alignée avec l'entrée du circuit de refroidissement pour diriger le flux d'air vers ladite entrée du circuit de refroidissement ;
dans laquelle la surface extérieure (740) est orientée selon un angle obtus (α1) par rapport à la première surface (410) du panneau de bouclier thermique (400) au niveau de la sortie (720) ; **caractérisée en ce que** :
le circuit de refroidissement (700) comprend en outre un dispositif de déclenchement (772) s'étendant depuis la surface extérieure (740) au niveau de la partie parallèle (760) dans le passage d'écoulement d'air (702), le dispositif de déclenchement se terminant à l'intérieur du passage d'écoulement d'air avant d'atteindre la surface intérieure, dans laquelle le circuit de refroidissement ne comprend pas de dispositif de déclenchement s'étendant depuis la surface intérieure (730) dans le passage d'écoulement d'air.
